# EUROPEAN PATENT APPLICATION

(11) **EP 2 030 780 A1**
(43) Date of publication of application: **04.03.2009**
(21) Application number: 08251868.9
(22) Date of filing: 29.05.2008
(51) Int. Cl.: B32B 27/08, B32B 27/32, B32B 27/34, B32B 27/36, B32B 29/00, B65D 65/40

(54) **Gas barrier packaging board**

(30) Priority: 01.06.2007 US 756854
(71) Applicant: WEYERHAEUSER COMPANY, Federal Way, WA 98063-9777 (US)
(72) Inventor: Shearer, Dwayne M, Seattle, WA 98105 (US); Fox, George M, Longview, WA 98632 (US)
(74) Representative: Bayliss, Geoffrey Cyril

(57) **Abstract**

A paperboard structure having a three layer product side construction of a gas barrier layer comprising a blend of at least one of aliphatic nylon, aromatic nylon, or a blend of nylons with polyethylene terephthalate, a tie layer and a low density polyethylene layer.

## Description

The field is packaging board. More specifically it is a packaging board that may be formed into cartons and cups and has gas barrier properties.

The need for a gas barrier in paperboard packages is well known and there have been many solutions to reduce gas transfer through the paperboard. The amount and rate of gas transfer will depend on the type of barrier layer or layers that is used. The gas barrier layer is either laminated, extruded or co-extruded onto the paperboard to provide a board with gas barrier properties.

There are other factors that enter into the choice of a barrier material. Cost is a factor, both in the type and cost of the barrier material being used and also in the amount required to obtain the necessary barrier properties. Other important factors are carton durability and pinholes. Pinholes are caused by heating/sealing of cartons or cups. The amount of barrier material required is also dependent on the uniformity of the barrier layer in both the machine direction and cross machine direction. Poor uniformity yields thick and thin spots which will change the gas barrier level. The type of material will also determine the amount of power required to extrude the material and therefore is a factor in the total cost of the packaging board.

Another factor is the adhesion of the material to the paperboard. Some materials adhere better than others. Some materials, such as nylon, require special board surface treatment to obtain adhesion to the paperboard. This also is reflected in the cost.

There is also the problem of pinholes. Pinholes are small holes in the plastic film that allow liquid contained in the container to contact and penetrate the paperboard. Wet paperboard is very weak and leads to poor durability and reduced shelf life. Pinholes occur when the plastic film is heated in a sealing operation. Heat generates steam in the paperboard and the steam generates bubbles in the plastic structure. Some of the bubbles burst and form pinholes. The number of pinholes can be greatly reduced if the low density polyethylene or linear low density polyethylene or other polyolefin flows into the bubble area thus sealing any pinholes.

Extrusion or co-extrusion is a faster, lower cost process than lamination. The cost of a laminate film and associated handling is also avoided with co-extrusion.

The present invention is directed to a cost effective gas barrier structure which has three layers on the product side and uses a blend of nylon and polyethylene terephthalate (PET) as the gas barrier. The nylons may be aliphatic nylons, aromatic nylons, blends of aliphatic nylons, blends of aromatic nylons, or blends of aliphatic and aromatic nylons.

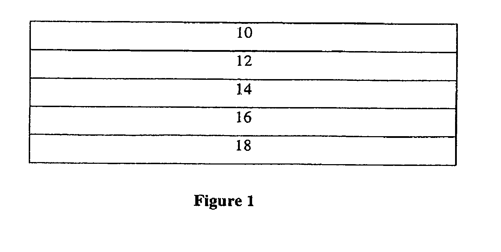

Figure 1 is a cross-sectional view of the board.

The base material is a paperboard 12 which has a first side and a second side opposite the first side. The paperboard may have a weight of 200 to 500 g/m².

A polyolefin layer 10 is applied to the outer or first surface of the paperboard 12. A typical outer polyolefin layer 10 is low density polyethylene. Layer 10 provides a good print surface. If improved carton durability is required then linear low density polyethylene, metallocene catalyzed linear low density polyethylene or a blend of low density polyethylene and linear low density polyethylene or metallocene catalyzed linear low density polyethylene may be used. These resins are tougher than low density polyethylene resins. Layer 10 is applied in amounts ranging from 15 to 25 grams per square meter (g/m²).

The gas barrier layer 14 is applied directly to the inner or second side of paperboard 12. The gas barrier layer 14 has a first side and a second side opposite the first side.

The gas barrier layer 14 is a blend of nylon and polyethylene terephthalate (PET).Various nylons may be used in the blend. The nylons may be aliphatic nylons, aromatic nylons, blends of aliphatic nylons, blends of aromatic nylons, or blends of aliphatic and aromatic nylons. Typical aliphatic nylons are nylon 6, nylon 66, nylon 6/66, nylon 6/9, nylon 6/10, nylon 11, nylon 12. Typical aromatic nylons are MXD6 or 6T-nylon. In one embodiment the nylon may be 25% to 75% by weight of the blend. In another embodiment the nylon may be 25% to 49% by weight of the blend The PET will be the remainder of the blend.

The amount of gas barrier material ranges from 5 to 15 grams per square meter. The amount and the blend ratio will determine the gas barrier property.

A tie layer 16 is applied directly to the gas barrier layer 14. The tie layer has a first side and a second side opposite the first side. The first side of the tie layer 16 is applied directly to the second side of gas barrier layer 14. The tie layer 16 may be any appropriate adhesive resin. A typical adhesive resin is a maleic anhydride modified polyethylene resin. Bynel® may be used as a tie layer. The adhesive resin may be a modified ethylene vinyl acetate, a modified ethylene acrylate, an anhydride modified high-density polyethylene, an anydride modified linear low density polyethylene, an anhydride modified low density polyethylene or an anhdydride modified polypropylene. Surlyn® may be used as a tie layer. Surlyn® is a partial sodium or magnesium salt of an ethylene/methacrylic acid copolymer. The usual amount of tie resin would be 3 to 9 grams per square meter.

An inner polyolefin layer 18 is applied directly to the tie layer 16. The inner polyolefin layer has a first side and a second side. The first side of the polyolefin layer 18 is applied directly to the second side of tie layer 16. The inner polyolefin product contact layer 18 is low density polyethylene. The amount of polyethylene may range from 12 to 40 grams per square meter.

Pinhole performance is improved significantly by concentrating all of the low density polyethylene in the one inner layer, as opposed to two layers as are used in some barrier structures. The single higher basis weight layer promotes flow and resealing of pinholes caused by heating.

In one embodiment the gas barrier layer, the tie layer and the polyethylene layer are co-ext,ruded.

Although preferred embodiments of the invention have been described using specific terms, such description is for illustrative purposes only. The words used are words of description rather than of limitation. It is to be understood that changes and variations may be made by those of ordinary skill in the art without departing from the spirit or scope of the present invention, which is set forth in the following claims. The spirit and scope of the appended claims should not be limited to the description of the preferred versions contained herein.

## Claims

1. A paperboard with gas barrier properties consisting of paperboard,
a gas barrier layer applied directly to the paperboard, the gas barrier consisting of a blend of nylon and polyethylene terephthalate, the nylon being selected from aliphatic nylons, aromatic nylons, blends of aliphatic nylons, blends of aromatic nylons, or blends of aliphatic and aromatic nylons,
a tie layer applied directly to the gas barrier layer, and
a low density polyethylene applied directly to the tie layer.

2. The paperboard of claim 1 wherein the nylon is 25 to 75 weight percent of the blend of nylon and polyethylene terephthalate.

3. The paperboard of claim 1 or 2 wherein the nylon is an aliphatic nylon.

4. The paperboard of claim 3 wherein the nylon is at least one of nylon 66, nylon 6/66, nylon 6/9, nylon 6/10, nylon 11 and nylon 12.

5. The paperboard of any one of the preceding claims wherein the nylon is an aromatic nylon.

6. The paperboard of claim 5 wherein the aromatic nylon is at least one of MXD6 or 6T-nylon.

7. The paperboard of any one of the preceding claims wherein the nylon is 25 to 49 weight percent of the blend of nylon and polyethylene terephthalate.

8. The paperboard of any one of the preceding claims wherein the gas barrier layer, the tie layer and the polyolefin layer are co-extruded.

9. The paperboard of any one of the preceding claims further comprising a second layer of polyolefin applied directly to the side of the paperboard opposite the gas barrier layer.
